(19) Europäisches Patentamt
European Patent Office
Office européen des brevets

(11) **EP 1 600 831 B1**

(12) **EUROPÄISCHE PATENTSCHRIFT**

(45) Veröffentlichungstag und Bekanntmachung des Hinweises auf die Patenterteilung:
**22.10.2008 Patentblatt 2008/43**

(51) Int Cl.:
***G05B 19/042*** *(2006.01)*      ***G05B 23/02*** *(2006.01)*

(21) Anmeldenummer: **05102514.6**

(22) Anmeldetag: **30.03.2005**

(54) **Verfahren und Vorrichtung zur Überwachung mehrerer Steuergeräte mittels einer Frage-Antwort-Kommunikation**

Method and apparatus for monitoring several electronic control units using question-answer-communication

Méthode et dispositif pour surveiller plusieurs appareils de commande en utilisant une communication interrogation-réponse

(84) Benannte Vertragsstaaten:
**DE ES FR GB IT SE**

(30) Priorität: **07.05.2004 DE 102004022624**

(43) Veröffentlichungstag der Anmeldung:
**30.11.2005 Patentblatt 2005/48**

(73) Patentinhaber: **ROBERT BOSCH GMBH**
**70442 Stuttgart (DE)**

(72) Erfinder: **Hagman, Per**
**70469 Stuttgart (DE)**

(56) Entgegenhaltungen:
**EP-A- 1 219 489          DE-A1- 10 205 809**
**DE-A1- 19 826 131**

**Beschreibung**

Die Erfindung betrifft ein Verfahren zur Überwachung eines Systems, ein System mit mehreren Steuergeräten sowie ein Computerprogramm und ein entsprechendes Computerprogrammprodukt zur Durchführung des Verfahrens.

Stand der Technik

Steuergeräte, insbesondere Motorsteuergeräte, werden üblicherweise nach einem 3-Ebenen Konzept überwacht. In diesem Konzept spielt ein von einem Funktionsrechner abhängiges Überwachungsmodul eine zentrale Rolle. Das Überwachungsmodul überwacht einen Funktionsrechner durch eine Frage-Antwort-Kommunikation. Hierbei wird durch das Überwachungsmodul überprüft, ob Antworten des Funktionsrechners richtig sind und/oder ob sie zu einem richtigen Zeitpunkt eingetroffen sind.

Ein System zur Steuerung und/oder Überwachung eines wenigstens zwei Steuergeräte aufweisenden Steuergeräteverbunds, mit einem ersten Steuergerät und wenigstens einem zweiten Steuergerät, ist aus der Druckschrift EP 1 219 489 A2 bekannt Hier ist vorgesehen dass das erste Steuergerät mit Mitteln zur Durchführung seiner Steuerfunktion und zur Überwachung dieser Steuerfunktion, sowie mit Mitteln zur Überwachung der Steuerfunktion des wenigstens einen zweiten Steuergeräts ausgebildet ist.

Die Druckschrift DE 102 05 809 A1 beschreibt ein Verfahren zur Überwachung der Steuerung von Betriebsabläufen bei einem Fahrzeug, wobei in einer Steuereinheit Steuerfunktionen ausgeführt werden, wobei ebenfalls Überwachungsfunktionen ausgeführt werden, die die Steuerfunktionen überwachen. Hierbei werden nacheinander mehrere Schritte durchgeführt. Zunächst überträgt ein Überwachungsmodul wenigstens eine Frage an die Steuereinheit, wobei in der Steuereinheit eine erste Überwachungsfunktion, insbesondere eine Ablaufkontrolle, vorgesehen ist, die in einem zweiten vorgebbaren Zeitraster zu der Frage eine Teilantwort berechnet. Weiterhin bildet die Steuereinheit aus wenigstens einer Teilantwort eine Antwort an das Überwachungsmodul. Die Bildung der Antwort wird in einem vorgebbaren ersten Zeitraster aktiviert, wobei die Steuereinheit die Antwort an das Überwachungsmodul überträgt und das Überwachungsmodul abhängig von der Antwort Fehler bezüglich der Ausführung der Steuerfunktionen erkennt. Dabei sind das erste und zweite Zeitraster zueinander asynchron.

Ein elektrisches Bremssystem mit einer ersten Einheit und mehrerer zweiter Einheiten für ein Kraftfahrzeug ist in der Druckschrift DE 198 26 131 A1 beschrieben. Hier ist vorgesehen, dass die erste Einheit Betätigungssignale von wenigstens einem vom Fahrer betätigbaren Bremsbedienelement empfängt und auf der Basis der Betätigungssignale Vorgabegrößen für die Steuerung der Radbremsen ermittelt. Die zweiten Einheiten sind den Radbremsen des Kraftfahrzeugs zugeordnet und setzen die Vorgabewerte in Steuersignale für die Radbremsen um. Außerdem sind die zweiten Einheiten jeweils einzeln einer einzelnen Radbremse zugeordnet. Die zweiten Einheiten umfassen jeweils ein Mikrorechnersystem, das sich selbst überwacht.

Vor dem Hintergrund immer komplexer werdender Systeme mit einer Vielzahl an Steuergeräten besteht ein Bedarf an Verfahren, mit denen die Überwachung derartiger Systeme sowohl sicher als auch unter geringem Aufwand durchführbar ist.

Hierzu wird ein Verfahren mit den Merkmalen des Patentanspruchs 1, ein System mit den Merkmalen des Patentanspruchs 12, ein Computerprogramm mit den Merkmalen des Patentanspruchs 13 und ein Computerprogrammprodukt mit den Merkmalen des Patentanspruchs 14 vorgestellt.

Vorteile der Erfindung

Die Erfindung betrifft ein Verfahren zur Überwachung eines Systems mit einem als Master definierten Steuergerät, in dem sich ein Überwachungsmodul und ein Funktionsrechner befinden, und einer Anzahl als Slaves definierter Steuergeräte durch das Überwachungsmodul. Bei dem Verfahren ist vorgesehen, dass bei dem auf eine von dem Überwachungsmodul bereitgestellte Frage, die von dem Funktionsrechner an die Slaves geschickt wird, von dem Master und den Slaves jeweils eine Antwort gegeben wird, wobei Antworten der Slaves an den Master zurückgesandt werden, und eine auf Grundlage dieser Antworten bereitgestellte gemeinsame Antwort von dem Überwachungsmodul überprüft wird.

Mit der Erfindung ist es möglich, Software, die innerhalb des Systems auf mehrere Steuergeräte aufgeteilt ist, einzelfehlersicher zu überwachen. Ein weiterer Vorteil ist, dass zur Durchführung dieses Verfahrens die Software in dem Überwachungsmodul und eine Frage-Antwort-Kommunikation, die bei herkömmlichen Verfahren zwischen dem Überwachungsmodul und einem Funktionsrechner stattfindet, unverändert bleiben.

Es ist.vorzugsweise vorgesehen, dass die gemeinsame Antwort durch einen Algorithmus ermittelt wird. Dabei werden die Antworten der Steuergeräte berücksichtigt. Das Überwachungsmodul wird in seiner Funktion nur indirekt durch das eigentliche Verfahren und den Algorithmus beeinflusst. Da das Überwachungsmodul nur eine gemeinsame Antwort erhält, können mit dem Verfahren beliebig viele Steuergeräte in hoch komplexen Systemen überwacht werden.

In Ausgestaltung des Verfahrens ist vorgesehen, dass die insbesondere von dem Überwachungsmodul bereitgestellte Frage von jedem Steuergerät dahingehend überprüft wird, ob diese Frage richtig oder falsch ist. In Abhängigkeit dessen kann jedes Steuergerät eine richtige oder definiert falsche Antwort bereitstellen.

Die Antwort Antw auf eine richtige Frage wird in Abhängigkeit eines die Frage definierenden Frageidentifikationscodes Frage_Id und eines das Steuergerät definierenden Steuergeräteidentifikationscodes Steuerg_Id bereitgestellt. Die Antwort Antw lautet beispielsweise:

$$Antw = (Frage\_Id + 1) * Steuerg\_Id \qquad (1)$$

Somit ist eine genaue Zuordnung der Antworten Antw möglich. Bei den Steuergeräteidentifikationscodes Steuerg_Id handelt es sich sowohl für den Master als auch für die Slaves um individuell festgelegte Primzahlen.

In bevorzugter Ausführung der Erfindung ist vorgesehen, daß die gemeinsame Antwort unter Berücksichtigung einer als korrekt definierten und einer wahren Antwort jeweils eines der Steuergeräte bereitgestellt wird. Durch diesen Vergleich zwischen Ist-Werten und Soll-Werten ist es unter geringem Aufwand zuverlässig möglich, Fehler innerhalb des Systems zu erkennen und infolgedessen gegebenenfalls Maßnahmen zur Behebung derartiger Fehler zu ergreifen.

Die gemeinsame Antwort g_Antw hängt u. a. von einer definierten gemeinsamen Antwort g_Antw_d gemäß nachstehender Formel ab:

$$g\_Antw\_d = M\_Antw - \Sigma S\_Antw\_d \qquad (2)$$

wobei M_Antw der Antwort des Masters und $\Sigma$ S_Antw_d der Summe der als korrekt definierten Antworten der Slaves entspricht.

Die gemeinsame Antwort g_Antw wird bspw. gemäß der Formel:

$$g\_Antw = g\_Antw\_d + \Sigma S\_Antw\_w \qquad (3)$$

in Abhängigkeit der definierten gemeinsamen Antwort g_Antw_d und einer Summe der wahren Antworten der Slaves $\Sigma$ S_Antw_w berechnet.

Bei dieser Vorgehensweise wird zur Berechnung der gemeinsamen Antwort demnach in einem ersten Schritt die definierte gemeinsame Antwort g_Antw_d durch Subtraktion der als korrekt definierten Antworten der Slaves $\Sigma$ S_Antw_d und der Masterantwort M_Antw bzw. der Antwort des Funktionsrechners definiert. In einem nächsten Schritt werden die empfangenen wahren Antworten der Slaves $\Sigma$ S_Antw_w zu der definierten gemeinsamen Antwort g_Antw_d addiert. Falls die wahren Antworten der Slaves S_Antw_w korrekt sind, wird die gemeinsame Antwort g_Antw den Wert der Masterantwort M_Antw haben. Ob innerhalb des Systems ein Fehler vorhanden oder nicht vorhanden ist, kann durch das Überwachungsmodul nunmehr durch Überprüfung lediglich eines Wertes für die gemeinsame Antwort g_Antw bestimmt werden.

Es ist vorgesehen, dass die Fragen und Antworten zwischen dem Master, insbesondere des Funktionsrechners, innerhalb des Masters und den Slaves ausgetauscht werden. Das Überwachungsmodul ist von dieser eventuell umfangreichen Frage-Antwort-Kommunikation nicht betroffen. Während des Verfahrens gibt das Überwachungsmodul lediglich eine Frage aus und erhält nur eine Antwort darauf.

Bei Durchführung des Verfahrens ist bevorzugt vorgesehen, dass Antworten jeweils eines der Slaves durch jeweils einen Fehlerzähler innerhalb des Master geprüft werden. Dies bietet eine hohe Flexibilität innerhalb des Systems. Für einen konkreten Fall kann eingestellt werden, wie viele Antworten eines der Slaves bspw. zu spät ankommen dürfen, ohne dass das Überwachungsmodul dies bemerkt. Somit ist es möglich, dass kurzzeitige Störungen innerhalb eines Kommunikationsnetzes des Systems (Busstörungen), die zur Folge haben, dass Antworten des einen Slaves nicht rechtzeitig bei dem Master ankommen, nicht als Fehler innerhalb dieses Slaves interpretiert werden und somit innerhalb des Überwachungsmoduls keine Fehlerreaktionen hervorrufen. Mit Hilfe dieses Fehlerzählers innerhalb des Masters werden somit unnötige Fehlerreaktionen vermieden.

Das erfindungsgemäße System weist ein als Master definiertes Steuergerät, in dem sich ein Überwachungsmodul und ein Funktionsrechner befinden, und eine Anzahl als Slaves definierte Steuergeräte auf. Zur Überwachung dieses Systems ist vorgesehen, dass auf eine von dem Überwachungsmodul bereitgestellte Frage, die der Funktionsrechner an die Slaves schickt, der Master und die Slaves jeweils eine Antwort geben, wobei die Slaves an den Master Antworten zurücksenden, und das Überwachungsmodul eine auf Grundlage dieser Antworten bereitgestellte gemeinsame Antwort überprüft.

Das System ist so ausgelegt, dass die Überwachung unabhängig von einer Anzahl der Steuergeräte überwacht werden kann.

Das erfindungsgemäße Computerprogramm mit Programmcodemitteln ist zur Durchführung aller Schritte des erfindungsgemäßen Verfahrens ausgelegt, wenn dieses Computerprogramm auf einem Computer oder einer entsprechenden Recheneinheit, insbesondere einem Steuergerät in dem erfindungsgemäßen System, durchgeführt wird.

Das erfindungsgemäße Computerprogrammprodukt mit Programmcodemitteln, die auf einem computerlesbaren Datenträger gespeichert sind, ist zur Durchführung des erfindungsgemäßen Verfahrens vorgesehen, wenn das Computerprogramm auf einem Computer oder einer entsprechenden Recheneinheit, insbesondere einem Steuergerät in dem erfindungsgemäßen System, durchgeführt wird.

Zeichnung

Ausführungsbeispiele der Erfindung sind in der Zeichnung dargestellt und werden in der nachfolgenden Beschreibung näher erläutert.

Figur 1 zeigt in schematischer Darstellung eine bevorzugte Ausführungsform des erfindungsgemäßen Systems.

Figur 2 zeigt einen ersten Aspekt einer bevorzugten Ausführungsform des erfindungsgemäßen Verfahrens in einem schematischen Diagramm.

Figur 3 zeigt einen weiteren Aspekt einer bevorzugten Ausführungsform des erfindungsgemäßen Verfahrens in einem schematischen Diagramm.

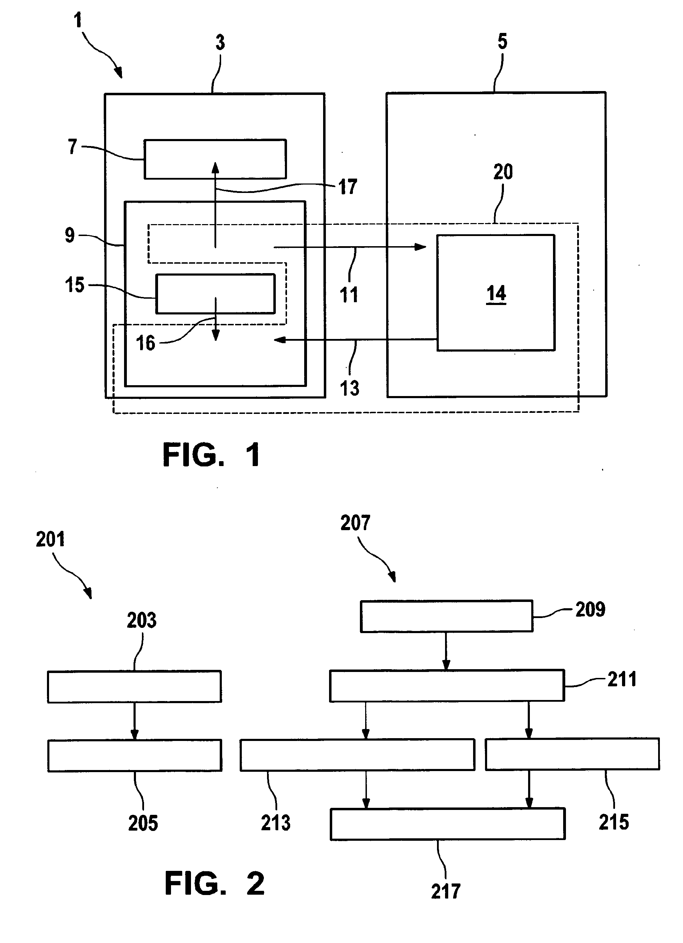

Das in Figur 1 dargestellte erfindungsgemäße System 1 umfaßt mehrere Steuergeräte 3, 5. Hierbei ist eines der Steuergeräte bspw. als Motorsteuergerät ausgebildet und als Master 3 definiert. Innerhalb dieses Masters 3 befindet sich ein Überwachungsmodul 7 sowie ein Funktionsrechner 9. Aufgrund dieser Ausgestaltung besitzt der Master 3 innerhalb des gesamten Systems zumindest bei Durchführung des erfindungsgemäßen Verfahrens gegenüber den anderen Steuergeräten des Systems 1 eine übergeordnete Stellung und/oder Funktion. Der Übersicht wegen wird in der Figur 1 nur ein weiteres als Slave 5 definiertes Steuergerät gezeigt, das System 1 kann jedoch eine beliebige Anzahl weiterer Steuergeräte bzw. Slaves 5 umfassen.

Es ist vorgesehen, daß auf sämtliche Slaves 5 eine Software zur Steuerung des Systems verteilt ist. Dabei enthalten die Slaves 5 Ebene-1-Module und Ebene-2-Module 14, die im Vergleich zu herkömmlichen Systemen in den Slaves 5 und nicht in dem Master 3 plaziert sind.

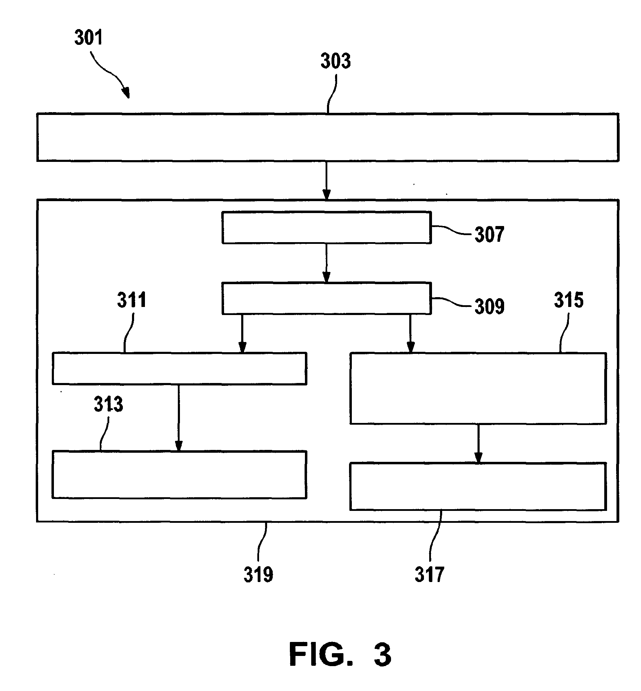

Der Master 3 umfaßt ebenfalls ein Ebene-2-Modul 15, das durch eine Frage-Antwort-Kommunikation durch das Überwachungsmodul 7 überwacht wird. Wie in den nachfolgenden Figuren 2 und 3 detaillierter gezeigt, werden mit Hilfe eines Algorithmus zur Durchführung des erfindungsgemäßen Verfahrens Fragen 11 an die Slaves 5 geleitet. Dabei werden diese Fragen 11 direkt von dem Funktionsrechner 9 aus, wenn der Funktionsrechner 9 die Fragen 11 empfangen hat, an die Slaves 5 geschickt.

Zum Austausch der Fragen 11 und von darauf basierenden Antworten 13 ist zwischen dem Master 3 und den Slaves 5 ein Kommunikationsmedium vorhanden. Dieses ist bspw. als CAN-Bus (Controller Area Network) ausgebildet. Es ist vorgesehen, dass das Überwachungsmodul 7 keine direkte Verbindung zu den Slaves 5 aufweist, weshalb die Fragen 11 von dem Funktionsrechner 9 weitergeleitet werden. Die Kommunikation zwischen dem Master 3 und den Slaves 5 findet somit unter Ausschluss des Überwachungsmoduls 7 innerhalb des gestrichelten Bereichs 20 statt.

Bei Durchführung des erfindungsgemäßen Verfahrens wird innerhalb der Ebene-2-Module 14 in den Slaves 5 auf Grundlage der Frage 11 eine Antwort 13 berechnet und an den Master 5 zurückgesandt. Zusätzlich wird innerhalb des Ebene-2-Moduls 15 des Masters 3 eine Antwort 16 berechnet. Zur Überwachung des Systems 1 erhält das Überwachungsmodul 7 auf Grundlage der Antworten 13 und 16 nur eine gemeinsame Antwort 17. Aufgrund dieser einen gemeinsamen Antwort 17 ist es möglich, dass Vorhandensein eines Fehlers des Systems 1, das eine beliebige Anzahl an Steuergeräten 3, 5 aufweisen kann, einzelfehlersicher zu bestimmen und eine entsprechende Maßnahme zur Behebung dieses mindestens einen Fehlers zu ergreifen.

Das erfindungsgemäße System ist somit derart ausgebildet, dass das Überwachungsmodul 7 bei Durchführung des erfindungsgemäßen Verfahrens lediglich den Master 3 wahrnimmt, die Slaves 5 sind auch bei beliebig großer Anzahl für das Überwachungsmodul 7 nicht existent Demnach kann zur Durchführung des erfindungsgemäßen Verfahrens eine herkömmliche Überwachungssoftware des Überwachungsmoduls 7 beibehalten werden. Alles was sich in dem System 1 außerhalb des gestrichelten Bereichs 20 befindet muss somit nicht verändert werden.

Figur 2 zeigt links in schematischer Darstellung ein Diagramm zum Weiterleiten 201 einer der vorstehend erwähnten Fragen. Ausgehend von einer Existenz 203 einer Frage N erfolgt eine Übersendung 205 der durch einen Frageidentifikationscode Frage_Id(N) ergänzten Frage N an jeweils einen der insgesamt k Slaves i.

In der Figur 2 rechts ist in schematischer Darstellung ein Diagramm zur Berechnung 207 einer Antwort 213, 215 auf die Frage innerhalb des Ebene-2-Moduls eines der Slaves i dargestellt. Die in Empfang 209 genommene Frage wird zunächst auf Korrektheit 211 überprüft. Das Überwachungsmodul kann $N_{Frage}$ verschiedene Fragen N stellen. Korrekte Fragen N weisen demnach gültige Werte zwischen Null und ($N_{Frage}$-1) auf. Nach Prüfung auf Korrektheit 211 jeweils einer der Fragen ist vorgesehen, daß der Slave i eine korrekte Antwort 213 berechnet. Diese korrekte Antwort 213 wird in einem abschließenden Schritt 217 an den Master gesandt. Falls sich aufgrund der Prüfung auf Korrektheit 211 ergeben sollte, daß die Frage nicht korrekt ist, so erstellt der Slave i eine definiert falsche Antwort 215, die ebenfalls in dem abschließenden Schritt 217 an den Master gesandt wird.

Bei der Berechnung 207 der Antworten 213, 215 ist vorgesehen, daß jeder der k Slaves i zu jeder Frage nur einmal antwortet, somit ist gewährleistet, daß jeder sicherheitsrelevante Einzelfehler entdeckt wird. Grundlage dessen ist, daß jeder der k Slaves i einen eigenen Steuergeräteidentifikationscode Steuerg_Id(i) aufweist. Bei diesem Steuergeräteidentifikationscode Steuerg_Id(i) handelt es sich z. B. um eine Primzahl. Die korrekte Antwort 213 wird vorzugsweise durch die Formel:

$$Antw = (Frage\_Id(N) + 1) * Steuerg\_Id(i) \qquad (1)$$

beschrieben. Diese korrekte Antwort Antw hängt des weiteren von dem für jede Frage N definierten Frageidentifikationscode Frage_Id(N) ab. Somit ist es möglich, eine Art eines Fehlers auf Grundlage des Frageidentifikationscodes Frage_Id(N) und dessen Herkunft über den Steuergeräteidentifikationscode Steuerg_Id(i) einzelfehlersicher zu bestimmen. Bei eventuellem Vorhandensein eines Fehlers stellt der Slave i dem Master auch auf eine korrekte Frage die korrekte Antwort 213 mit jedoch einem falschen Wert bereit.

Die Frage wird zusammen mit dem Frageidentifikationscode Frage_Id(N) an die Slaves weitergeleitet. Diesen Frageidentifikationscode Frage_Id senden die Slaves zusammen mit der Antwort an den Master weiter. Dies gewährleistet, daß der Master weiß, welcher Frage eine Antwort entspricht.

Figur 3 zeigt in einem schematischen Diagramm Details zur Berechnung 301 einer gemeinsamen Antwort, die auf den Antworten von k Slaves i und der Antwort des Masters basiert. Hierbei wird in einem ersten Schritt 303 eine definierte gemeinsame Antwort g_Antw_d gemäß der Formel:

$$g\_Antw\_d = M\_Antw - \Sigma S\_Antw\_d(i) \qquad (2)$$

mit der Antwort des Masters M_Antw und der Summe der als korrekt definierten Antworten der k Slaves i $\Sigma S\_Antw\_d$(i) bereitgestellt. Diese definierte gemeinsame Antwort g_Antw_d wird in einem zweiten Schritt 319 zur Bestimmung der eigentlichen, wahren gemeinsamen Antwort g_Antw berücksichtigt.

Es ist vorgesehen, daß dieser zweite Schritt 319 für sämtliche k Slaves i durchgeführt wird. Falls der Slave i gemäß einem ersten Teilschritt 307 aktiv ist, empfängt der Master von diesem Slave i bei einem Antwortempfangschritt 307 eine neue, wahre Antwort S_Antw_w(i). Ein Vorhandensein einer wahren Antwort S_Antw_w(i) wird in einem Existenzschritt 309 überprüft. Ist die Antwort S_Antw_w(i) eingetroffen, so erfolgen in einem linken Zweig die beiden W-Prüfschritte 311, 313. Falls von dem Slave i keine Antwort eintrifft, so erfolgen innerhalb eines rechten Zweigs die beiden F-Prüfschritte 315,317.

Bei dem ersten W-Prüfschritt 311 wird für jeden Slave i der Wert eines Fehlerzählers S_Z(i) auf Richtigkeit überprüft. Ist dies der Fall, so wird in dem zweiten W-Prüfschritt 315 die gemeinsame Antwort g_Antw berechnet. Dabei wird zu einem bereits vorhandenen Wert für die gemeinsame Antwort g_Antw(i) für jeden einzelnen Slave i ein Wert für die wahre Antwort dieses Slaves i S_Antw_w(i) hinzuaddiert, so daß für einen jeweils aktuellen, von i abhängigen Wert der gemeinsamen Anwort folgendes gilt:

$$g\_Antw(i) = g\_Antw(i-1) + S\_Antw\_w(i)$$

Des weitem wird ein Wert des Fehlerzählers S_Z(i) um 1 verringert.

Die eigentliche, wahre gemeinsame Antwort g_Antw ergibt sich insgesamt aus der im ersten Schritt 303 berechneten definierten gemeinsamen Antwort g_Antw_d und der Summe sämtlicher k Antworten S_Antw_w(i) aller k Slaves i:

$$g\_Antw = g\_Antw\_d + \Sigma S\_Antw\_w(i) \qquad (3)$$

nach Einsetzen der Formel (2) ergibt dies:

$$g\_Antw = M\_Antw - \Sigma S\_Antw\_d(i) + \Sigma S\_Antw\_w(i).$$

Falls das System fehlerfrei arbeitet, so entspricht die Summe der als korrekt definierten Antworten der k Slaves i $\Sigma S\_Antw\_d(i)$ als Sollwert der Summe der wahren Antworten $ES\_Antw\_w(i)$ als Istwert. Dies bedeutet jedoch, daß die gemeinsame Antwort $g\_Antw$ der Antwort $M\_Antw$ des Masters entspricht. Dies ist das einzige von dem Überwachungsmodul zu überprüfende Kriterium.

In dem F-Prüfschritt 315 rechts wird für den Fall, daß der Slave i keine Antwort bereitstellt, ein aktueller Wert der gemeinsamen Antwort $g\_Antw(i)$ nach folgender Formel, mit $S\_Antw\_d(i)$ als definierter Antwort des Slaves i, berechnet:

$$g\_Antw(i) = g\_Antw(i\text{-}1) + s\_Antw\_d(i)\text{*}(Frage\_Id+1).$$

Für jeden Slave i gibt es einen Fehlerzähler $S\_Z(i)$ und eine maximale Anzahl an Fehlern, die zu spät oder gar nicht ankommen dürfen. Wenn eine Antwort von einem der k Slaves i bei einer Berechnung der gemeinsamen Antwort $g\_Antw$ bei dem ersten F-Prüfschritt 315 nicht angekommen ist, wird der Fehlerzähler $S\_Z(i)$ um 3 inkrementiert. Solange der Fehlerzähler für den Slave i nicht den zulässigen Maximalwert übersteigt, wird die richtige Antwort $S\_Antw\_w(i)$ des Slaves i zur gemeinsamen Antwort $g\_Antw$ addiert.

Wenn eine Antwort des Slaves i zu spät ankommt und der entsprechende Fehlerzähler $S\_Z(i)$ einen höheren Wert als erlaubt aufweist, wird die richtige Antwort $S\_Antw\_w(i)$ nicht zu der gemeinsamen Antwort $g\_Antw$ addiert. Infolgedessen wird das Überwachungsmodul eine falsche Antwort erhalten.

Wenn eine Antwort des Slaves i $S\text{-}Antw\_w(i)$ zum richtigen Zeitpunkt ankommt, wird innerhalb des zweiten W-Prüfschritts 313 der Wert des entsprechenden Fehlerzählers $S\_Z(i)$ um 1 dekrementiert. Der niedrigste Wert des Fehlerzählers $S\_Z(i)$ ist Null. Wenn der Wert des Fehlerzählers $S\_Z(i)$ den maximal zulässigen Wert überstiegen hat, muß der Fehlerzähler $S\_Z(i)$ wieder den Wert Null erreichen, bevor eine Antwort wieder zu spät ankommen darf.

Für den Fehlerzähler betrage ein Maximalwert bspw. $S\_Z(i) = 6$, falls nun eine Slaveantwort $S\_Antw\_w(i)$ zu spät ankommt, wird der Fehlerzähler $S\_Z(i)$ um 3 inkrementiert, d.h. $S\_Z(i) = 3$. Wenn die nächste Antwort zum richtigen Zeitpunkt ankommt, wird $S\_Z(i)$ um 1 verringert, so daß $S\_Z(i) = 2$. Für den Fall, daß eine dritte Antwort zu spät ankommt, darf die korrekte Slaveantwort nicht hinzugefügt werden, da der Fehlerzähler noch nicht den Wert Null erreicht hat, nachdem eine Slaveantwort zum richtigen Zeitpunkt angekommen ist. D. h., die Bedingung, daß $S\_Z(i)$ größer als ein Maximalwert ist, muß nicht das einzige Kriterium für einen maximal zulässigen Wert sein.

Die Erfindung ist bspw. für eine Anwendung zur Überwachung einer ungewollten Beschleunigung eines Fahrzeugs geeignet. Dabei ist das Motorsteuergerät als Master definiert. Die Slaves bestehen mit Ausnahme des Motorsteuergeräts aus Steuergeräten, die die sicherheitsrelevante Software für die Beschleunigung enthalten. Die Erfindung ist jedoch auch auf andere Systeme anwendbar, in denen eine Überwachung auf einer ähnlichen Frage-Antwort-Kommunikation basiert.

**Patentansprüche**

1. Verfahren zur Überwachung eines Systems (1) mit einem als Master (3) definierten Steuergerät, in dem sich ein Überwachungsmodul (7) und ein Funktionsrechner (9) befinden, und einer Anzahl als Slaves (5) definierten Steuergeräten durch das Überwachungsmodul (7), **dadurch gekennzeichnet, dass** auf eine von dem Überwachungsmodul (7) bereitgestellte Frage (11), die von dem Funktionsrechner (9) an die Slaves (5) geschickt wird, von dem Master (3) und den Slaves (5) jeweils eine Antwort (13, 16, 213, 215) gegeben wird, wobei Antworten (13, 213, 215) der Slaves (5) an den Master (3) zurückgesandt werden, und eine auf Grundlage dieser Antworten (13, 213, 215) und der Antwort (16) der Masters bereitgestellte gemeinsame Antwort (17) von dem Überwachungsmodul (7) überprüft wird.

2. Verfahren nach Anspruch 1, bei dem die gemeinsame Antwort (17) durch einen Algorithmus (301) ermittelt wird.

3. Verfahren nach Anspruch 1 oder 2, bei dem die Frage (11, 203, 209) von jedem Steuergerät (3, 5) dahingehend überprüft wird, ob diese richtig oder falsch ist, und die Antwort (13, 16, 213, 215) in Abhängigkeit dessen ermittelt wird.

4. Verfahren nach Anspruch 3, bei dem die Antwort auf eine richtige Frage (11) in Abhängigkeit eines die Frage (11) definierenden Frageidentifikationscodes und eines das Steuergerät (3, 5) definierenden Steuergeräteidentifikationscodes bereitgestellt wird.

5. Verfahren nach Anspruch 4, bei dem die Antwort Antw auf eine richtige Frage gemäß der Formel:

$$\text{Antw} = (\text{Frage\_Id} + 1) * \text{Steuerg\_Id} \qquad (1)$$

mit dem Frageidentifikationscode Frage_Id und dem Steuergeräteidentifikationscode Steuerg_Id ermittelt wird.

6. Verfahren nach einem der vorstehenden Ansprüche, bei dem die gemeinsame Antwort (17, 313) unter Berücksichtigung einer als korrekt definierten und einer wahren Antwort (13, 16) jeweils eines der Steuergeräte (3, 5) bereitgestellt wird.

7. Verfahren nach Anspruch 6, bei dem eine definierte gemeinsame Antwort (309) in Abhängigkeit einer Antwort (16) des Masters (3) und einer Summe der als korrekt definierten Antworten (13, 213, 215) der Slaves (5) bereitgestellt wird.

8. Verfahren nach Anspruch 6 oder 7, bei dem die definierte gemeinsame Antwort g_Antw_d gemäß der Formel:

$$\text{g\_Antw\_d} = \text{M\_Antw} - \Sigma\, \text{S\_Antw\_d} \qquad (2)$$

mit der Antwort M_Antw des Masters (3) und der Summe der als korrekt definierten Antworten $\Sigma$ S_Antw_d der Slaves (5) ermittelt wird.

9. Verfahren nach einem der Ansprüche 6 bis 8, bei dem die gemeinsame Antwort g_Antw gemäß der Formel:

$$\text{g\_Antw} = \text{g\_Antw\_d} + \Sigma\, \text{S\_Antw\_w} \qquad (3)$$

unter Berücksichtigung einer Summe der wahren Antworten $\Sigma$ S_Antw_w der Slaves (5) ermittelt wird.

10. Verfahren nach einem der vorstehenden Ansprüche, bei dem die Fragen (11) und Antworten (13) zwischen dem Master und den Slaves ausgetauscht werden.

11. Verfahren nach einem der vorstehenden Ansprüche, bei dem Antworten (13, 16, 213, 215) jeweils eines der Slaves (5) durch jeweils einen Fehlerzähler innerhalb des Masters (3) geprüft werden.

12. System mit einem als Master (3) definierten Steuergerät, in dem sich ein Überwachungsmodul (7) und ein Funktionsrechner (9) befinden, und einer Anzahl als Slaves (5) definierten Steuergeräte, **dadurch gekennzeichnet, dass** zur Überwachung des Systems (1) vorgesehen ist, dass auf eine von dem Überwachungsmodul (7) bereitgestellte Frage (11), die der Funktionsrechner (9) an die Slaves (5) schickt, der Master (3) und die Slaves (5) jeweils eine Antwort (13, 16, 213, 215) geben, wobei die Slaves (5) an den Master (3) Antworten (13, 213, 215) zurücksenden, und das Überwachungsmodul (7) eine auf Grundlage dieser Antworten (13, 16, 213, 215) bereitgestellte gemeinsame Antwort (7) überprüft.

13. Computerprogramm mit Programmcodemitteln, um alle Schritte eines Verfahrens nach einem der Ansprüche 1 bis 11 durchzuführen, wenn das Computerprogramm auf einem Computer oder einer entsprechenden Recheneinheit, insbesondere einem Steuergerät (3, 5) in einem System (1) nach Anspruch 12, durchgeführt wird.

14. Computerprogrammprodukt mit Programmcodemitteln, die auf einem computerlesbaren Datenträger gespeichert sind, um ein Verfahren nach einem der Ansprüche 1 bis 11 durchzuführen, wenn das Computerprogramm auf einem Computer oder einer entsprechenden Recheneinheit (9), insbesondere einem Steuergerät (3, 5) in einem System (1) nach Anspruch 12, durchgeführt wird.

**Claims**

1. Method for monitoring a system (1) having a control unit which is defined as a master (3) and in which a monitoring module (7) and a functional computer (9) are located and a number of control units which are defined as slaves (5), by means of the monitoring module (7), **characterized in that** the master (3) and the slaves (5) each output a response (13, 16, 213, 215) to an inquiry (11) which is produced by the monitoring module (7) and is transmitted from the functional computer (9) to the slaves (5), wherein responses (13, 213, 215) of the slaves (5) are sent back to the master (3), and a common response (17) which is produced on the basis of these responses (13, 213, 215) and the response (16) of the master is checked by the monitoring module (7).

2. Method according to Claim 1, in which the common response (17) is determined by means of an algorithm (301).

3. Method according to Claim 1 or 2, in which the inquiry (11, 203, 209) is checked by each control unit (3, 5) to determine whether said inquiry (11, 203, 209) is correct or incorrect, and the response (13, 16, 213, 215) is determined as a function thereof.

4. Method according to Claim 3, in which the response to a correct inquiry (11) is produced as a function of an inquiry identification code which defines the inquiry (11), and as a function of a control unit identification code which defines the control unit (3, 5).

5. Method according to Claim 4, in which the response (Antw) to a correct inquiry is determined according to the formula:

$$Antw = (Frage\_Id + 1) * Steuerg\_Id \qquad (1)$$

with the inquiry identification code (Frage_Id) and the control unit identification code (Steuerg_Id).

6. Method according to one of the preceding claims, in which the common response (17, 313) is produced taking into account a response (13), which is defined as correct, and a true response (16) of one of the control units (3, 5) in each case.

7. Method according to Claim 6, in which a defined common response (309) is produced as a function of a response (16) of the master (3) and a sum of those responses (13, 213, 215) of the slaves (5) which are defined as correct.

8. Method according to Claim 6 or 7, in which the defined common response (g_Antw_d) is determined according to the formula:

$$g\_Antw\_d = M\_Antw - \Sigma\, S\_Antw\_d \qquad (2)$$

with the response (M_Antw) of the master (3) and the sum of those responses ($\Sigma$ S_Antw_d) of the slaves (5) which are defined as correct.

9. Method according to one of Claims 6 to 8, in which the common response (g_Antw) is determined according to the formula:

$$g\_Antw = g\_Antw\_d + \Sigma\, S\_Antw\_w \qquad\qquad (3)$$

taking into account a sum of the true responses ($\Sigma$ S_Antw_w) of the slaves (5).

10. Method according to one of the preceding claims, in which the inquiries (11) and responses (13) are exchanged between the master and the slaves.

11. Method according to one of the preceding claims, in which responses (13, 16, 213, 215) of, in each case, one of the slaves (5) are checked by a fault counter within the master (3) in each case.

12. System having a control unit which is defined as a master (3) and in which a monitoring module (7) and a functional computer (9) are located, and a number of control units which are defined as slaves (5), **characterized in that** for the monitoring of the system (1) there is provision that the master (3) and the slaves (5) each output a response (13, 16, 213, 215) to an inquiry (11) which is produced by the monitoring module (7) and which the functional computer (9) transmits to the slaves (5), wherein the slaves (5) send back responses (13, 213, 215) to the master (3), and the monitoring module (7) checks a common response (7) which is produced on the basis of these responses (13, 16, 213, 215).

13. Computer program having program code means for carrying out all the steps of a method according to one of Claims 1 to 11, when the computer program is executed on a computer or a corresponding computing unit, in particular a control unit (3, 5) in a system (1) according to Claim 12.

14. Computer program product having program code means which are stored on a computer-readable data carrier for carrying out a method according to one of Claims 1 to 11 when the computer program is executed on a computer or a corresponding computing unit (9), in particular a control unit (3, 5) in a system (1) according to Claim 12.

**Revendications**

1. Procédé de surveillance d'un système (1) comportant un appareil de commande défini comme maître (3) ayant un module de surveillance (7) et un calculateur de fonction (9) ainsi qu'un certain nombre d'appareils de commande définis comme des esclaves (5) par le module de surveillance (7),
   **caractérisé en ce qu'**
   à une requête (11) fournie par le module de surveillance (7), envoyée par le calculateur de fonction (9) vers les esclaves (5), le maître (3) et les esclaves (5) émettent respectivement une réponse (13,16, 213, 215),
   les réponses (13, 213, 215) des esclaves étant renvoyées vers le maître (3) et le module de surveillance (7) vérifie une réponse commune (17) préparée sur le fondement de ces réponses (13, 213, 215) et de la réponse (16) du maître.

2. Procédé selon la revendication 1,
   selon lequel
   la réponse commune (17) se détermine à l'aide d'un algorithme (301).

3. Procédé selon les revendications 1 ou 2,
   selon lequel
   la requête (11, 203, 209) est vérifiée en continu par l'appareil de commande (3, 5) correspondant, pour déterminer si elle est vraie ou fausse et en fonction de quoi on détermine la réponse (13, 16, 213, 215).

4. Procédé selon la revendication 3,
   selon lequel

la réponse à la requête correcte (11) est fournie en fonction d'un code d'identification de requête définissant la requête (11) et d'un code d'identification d'appareil de commande définissant l'appareil de commande (3, 5).

5. Procédé selon la revendication 4,
   selon lequel
   la réponse (Antw) a une requête correcte se détermine selon la formule suivante :

$$\text{Antw} = (\text{Frage\_Id} + 1) * \text{Steuerg\_Id} \qquad (1)$$

avec le code d'identification de requête (Frage_Id) et le code d'identification d'appareil de commande (Steuerg_Id).

6. Procédé selon l'une des revendications précédentes,
   selon lequel
   la réponse commune (17, 313) est fournie en tenant compte d'une réponse (13, 16) définie comme correcte et d'une réponse correcte fournie chaque fois par l'un des appareils de commande (3, 5).

7. Procédé selon la revendication 6,
   selon lequel
   une réponse commune définie (309) est fournie en fonction d'une réponse (16) du maître (3) et une somme des réponses (13, 213, 215) des esclaves (5) définies comme correctes.

8. Procédé selon la revendication 6 ou 7,
   selon lequel
   le mot de réponse commun (g_Antw_d) est donné par la formule suivante :

$$\text{g\_Antw\_d} = \text{M\_Antw} - \Sigma\,\text{S\_Antw\_d} \qquad (2)$$

avec la réponse (m-rep) du maître (3) et la somme des réponses des esclaves (5)définies comme correctes ($\Sigma$ S_Antw_d).

9. Procédé selon l'une des revendications 6 à 8,
   selon lequel
   la réponse commune (g_Antw) est donnée par la formule suivante :

$$\text{g\_Antw} = \text{g\_Antw\_d} + \Sigma\,\text{S\_Antw\_w} \qquad (3),$$

en tenant compte d'une somme des réponses vraies ($\Sigma$ S_Antw_w) des esclaves (5).

10. Procédé selon l'une des revendications précédentes,
    selon lequel
    on échange les requêtes (11) et les réponses (13) entre le maître et les esclaves.

11. Procédé selon l'une des revendications précédentes,
    selon lequel
    on vérifie respectivement par un compteur d'erreurs dans le maître (3) la réponse (13, 16, 213, 215) de chaque fois l'un des esclaves (5).

12. Système comportant un appareil de commande défini comme maître (3) ayant un module de surveillance (7) et un calculateur de fonction (9) ainsi qu'un nombre d'appareils de commande définis comme des esclaves (5),
    **caractérisé en ce que**
    pour surveiller le système (1) le maître (3) et les esclaves (5) émettent respectivement une réponse (13, 16, 213, 215), à une requête (11) fournie par le module de surveillance (7), que le calculateur de fonction (9) envoie aux esclaves (5), les esclaves (5) renvoient au maître (3) les réponses (13, 213, 215) et le module de surveillance (7) vérifie la réponse commune (7) fournie sur le fondement des réponses (13, 16, 213,215).

13. Programme d'ordinateur comportant des moyens de code de programme pour effectuer toutes les étapes d'un procédé selon l'une des revendications 1 à 11 lorsque le programme d'ordinateur est exécuté par un ordinateur ou une unité de calcul correspondante, notamment dans un appareil de commande (3, 5), dans un système (1), selon la revendication 12.

14. Produit programme d'ordinateur comportant des moyens de code de programme enregistrés sur un support de données que peut lire un ordinateur pour effectuer un procédé selon l'une des revendications 1 à 11 lorsque le programme d'ordinateur est exécuté par un ordinateur ou une unité de calcul correspondante (9), notamment un appareil de commande (3, 5) dans un système (1) selon la revendication 12.

**FIG. 1**

**FIG. 2**

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1219489 A2, Druckschrift
- DE 10205809 A1, Druckschrift
- DE 19826131 A1, Druckschrift